# EUROPEAN PATENT APPLICATION

(11) **EP 4 650 639 A1**
(43) Date of publication of application: **19.11.2025**
(21) Application number: 24386055.8
(22) Date of filing: 15.05.2024
(51) Int. Cl.: F16L 9/18, F16L 59/14, F16L 59/147

(54) **FLUID ASSEMBLY**

(71) Applicant: Airbus Operations Limited, Bristol BS34 7PA (GB)
(72) Inventor: Papadopoulos, Christopher, Filton, Bristol, BS34 7PA (GB)
(74) Representative: Worthington, Richard Easton

(57) **Abstract**

A fluid assembly comprising: a first conduit extending in an axial direction and configured to carry a fluid, a double walled outer second conduit extending in the axial direction; the second conduit having an inner wall and outer wall and a first interspace between the inner and outer walls, wherein the first conduit is housed inside the second conduit to form a second interspace between the first conduit and the inner wall of the second conduit.

## Description

### FIELD OF THE INVENTION

The present invention relates to a fluid assembly, a further fluid assembly, and a method of replacing parts in such fluid assemblies.

### BACKGROUND OF THE INVENTION

Fluid assemblies are used to store fluid or transport fluid from one location to the other. The fluid assemblies may include double containment arrangements that have a primary structure housed in a secondary structure. This creates a fail-safe system that contains any leaked fluid if a failure occurs in the primary structure. When double containment structures systems are used for prolonged periods, it is difficult to perform maintenance tasks on the secondary structure without interrupting the operation of the primary structure, and vice versa. These fluid systems are also vulnerable to leakage if a failure occurs in the secondary structure.

### SUMMARY OF THE INVENTION

A first aspect of the invention provides a fluid assembly comprising:
a first conduit extending in an axial direction and configured to carry a fluid, a double walled outer second conduit extending in the axial direction, the second conduit having an inner wall and outer wall and a first interspace between the inner and outer walls,
wherein the first conduit is housed inside the second conduit to form a second interspace between the first conduit and the inner wall of the second conduit.

The fluid assembly may be a fluid transport assembly or a fluid containment assembly. The fluid assembly may be thermally insulated. Such an assembly is referred to hereafter as fluid assembly.

The first interspace defines a distance between the inner and outer wall of the second conduit. The inner wall does not directly contact the outer wall of the second conduit. The second interspace defines a distance between the first conduit and the second conduit. The inner wall of the second conduit does not directly contact the first conduit.

A further aspect of the invention provides a fluid assembly comprising,
a first storage tank configured to hold a fluid, a double walled outer second tank; the second tank having an inner wall and outer wall and a first interspace between the inner and outer walls, wherein the first tank is housed inside the second tank to form a second interspace between the first storage tank and the inner wall of the second tank.

The first interspace defines a distance between the inner and outer wall of the second tank. The inner wall does not directly contact the outer wall of the second tank. The second interspace defines a distance between the first tank and the second tank. The inner wall of the second tank does not directly contact the first tank.

Optionally, the first interspace contains a vacuum.

Optionally, the assembly further comprises at least one bracket between the outer wall and the inner wall of the second conduit or the second storage tank, wherein the bracket is configured to maintain co-axial relationship between the outer wall and the inner wall of the second conduit or the second tank.

The bracket may be secured to the inner wall and outer wall of the second conduit or the second storage tank. The bracket may be rigid to provide maintain the distance between the outer wall and inner wall of the second conduit or the second tank.

Optionally, wherein the at least one bracket is removably coupled to the inner wall of the second conduit or the inner wall of the second tank.

The bracket may be fixed to the inner wall of the second conduit or the second tank through an inner fixture. The bracket may be fixed to the outer wall of the second conduit or the second tank through an outer fixture. The inner fixture and/or the outer fixture of the bracket may be removable from the inner wall or the outer wall of the second conduit or the second tank. The inner wall and/or the outer wall may be disconnected from the second conduit or second tank. The outer wall and/or the second wall may be removed without removing the inner wall and/or inner wall respectively.

Optionally, the second interspace contains insulation wrapped around the first conduit or the first storage tank.

The insulation thermally insulates the fluid in the first conduit or the first storage tank. The insulation contains the fluid in the first conduit or the first storage tank if the first conduit or the first storage tank leaks. The insulation may be wrapped around the first conduit or at least partially secured to the first conduit or first storage tank.

Optionally, the first interspace contains insulation wrapped around the inner wall or the outer wall of the second conduit or around the inner wall or the outer wall of the second tank.

The insulation acts to insulate the first interspace. The insulation also acts as a barrier if the inner wall or the outer wall of the second conduit or the second storage tank fails. The insulation may be wrapped around the inner wall or the outer wall of the second conduit or the second tank or at least partially secured to the inner wall or the outer wall of the second conduit or the second tank.

Optionally, the insulation comprises multi-layered insulation.

Optionally, the second interspace contains a vacuum.

The vacuum provides thermal insulation between the inner wall and outer wall of the second conduit. The inner wall is thermally isolated from the outer wall of the second conduit. The vacuum provides thermal insulation between the inner wall and outer wall of the second tank. The inner wall is thermally isolated from the outer wall of the second tank.

Optionally, the second interspace contains a pressurised fluid.

Optionally, the pressurised fluid is an inert gas, preferably Helium.

Optionally, the pressurised fluid in the second interspace is at a higher pressure than a pressure of the fluid in the first conduit or the pressure of the fluid in the first storage tank.

The pressurised fluid can flow from the second interspace if the inner wall of the second conduit or the second tank fails. The pressurised fluid can flow into the first conduit or the first storage tank if the first conduit or the first storage tank fails.

Optionally, the second interspace contains a plurality of glass microbubbles.

Optionally, the fluid carried by the first conduit or held by the first storage tank is a cryogenic fluid, preferably at a temperature below -150°C.

Optionally, the fluid is liquid hydrogen.

Optionally, the second interspace contains at least one sensor.

Optionally, the at least one sensor is a pressure sensor or a temperature sensor or a gas sensor.

Optionally, the second interspace further comprises an inflatable flexible structure anchored to the first conduit or first storage tank so as to surround the first conduit or the first storage tank.

Optionally, the assembly further comprises at least one spacer between the second conduit and the first conduit or between the second tank and the first storage tank.

The spacer may contact the inner wall of the second conduit and the first conduit in an interference fit. The spacer may be non-metallic. The spacer may maintain thermal insulation between the first conduit and the second conduit.

Optionally, the assembly further comprises charge valves coupled to the second conduit or to the second storage tank.

Optionally, the assembly may further comprising a plurality of first conduits housed inside the second conduit, wherein each first conduit is arranged in parallel with the first conduit and each first conduit is configured to carry a fluid, or a plurality of first storage tanks housed inside the second tank, wherein each first storage tank is arranged in parallel with the first storage tank and each first storage tank is configured to hold a fluid.

Optionally, the fluid assembly is provided in an aircraft.

A further aspect of the invention provides a method of replacing a part in a fluid assembly as described herein, comprising removing and replacing the first conduit or first storage tank without disrupting the second conduit or second storage tank; or removing and replacing the second conduit or second storage tank without disrupting the first conduit or first storage tank.

Optionally, removing and replacing the first conduit or first storage tank or the second conduit or second storage tank further comprises decoupling at least one spacer positioned between the first conduit or first storage tank and the second conduit or second storage tank before removing and replacing the first conduit or first storage tank or the second conduit or second storage tank.

Optionally, when the first interspace contains a fluid or a vacuum, removing and replacing the first conduit or first storage tank does not disrupt the fluid or vacuum in the first interspace.

### BRIEF DESCRIPTION OF THE DRAWINGS

Embodiments of the invention will now be described with reference to the accompanying drawings, in which:
Figure 1 shows a cross-sectional view of a fluid assembly;
Figure 2A shows a cross-sectional view of another exemplary fluid assembly;
Figure 2B shows an exemplary method of replacing a part in a fluid assembly;
Figure 3 shows an exemplary bracket;
Figure 4 shows a cross-sectional view of another exemplary fluid assembly with glass microbubbles;
Figure 5A shows a cross-sectional view of another exemplary fluid assembly with a deflated membrane;
Figure 5B shows a cross-sectional view of another exemplary fluid assembly with an inflated membrane;
Figure 6 shows a cross-sectional view of another exemplary fluid assembly with a insulation;
Figure 7 shows a cross-sectional view of another exemplary fluid assembly with multiple first conduits;
Figure 8 shows a perspective view of another exemplary fluid assembly;
Figure 9 shows an aircraft.

### DETAILED DESCRIPTION OF EMBODIMENT(S)

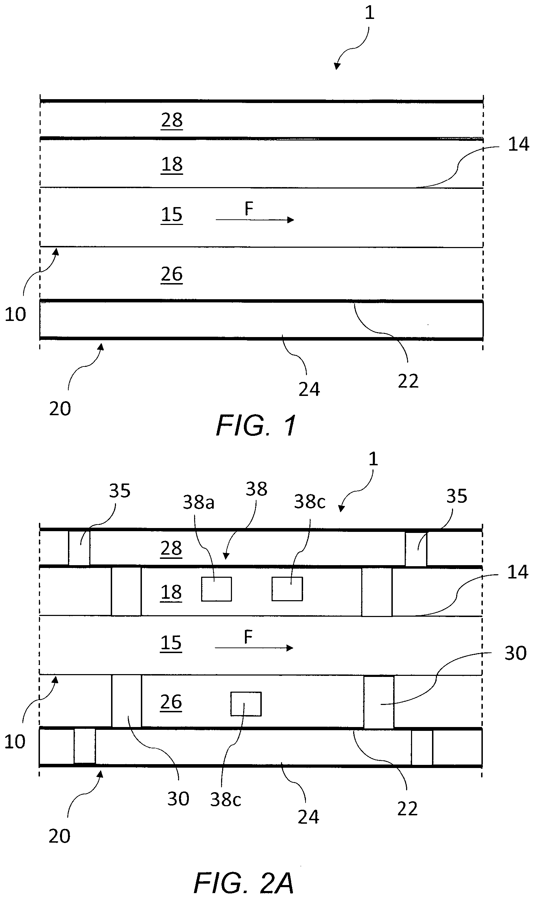

A cross-sectional view of an exemplary fluid assembly 1 is shown in Figure 1. The fluid assembly 1 comprises a first conduit 10 and a secondary conduit 20. The fluid assembly 1 forms part of a larger assembly that may also include spacers 30 that are remote from the cross-section shown in Figure 1.

The first conduit 10 is provided as a pipe. The first conduit 10 is substantially cylindrical and has a continuous outer wall 14. The first conduit 10 defines an inner volume 15 inside the outer wall 14 that extends along the length of the first conduit 10. As shown, the inner volume 15 of the first conduit 10 provides an inner flow path F that permits the fluid to flow in the axial direction. The fluid may be a liquid (such as kerosene or liquid hydrogen) or a gas. Preferably, the inner fluid flow path may contain a liquid at a temperature below -150°C. The inner fluid flow path may contain a liquid hydrogen at a temperature below -250°C.

The second conduit 20 is also provided as a pipe. The second conduit 20 is substantially cylindrical. The second conduit 20 is a double walled outer second conduit 20 extending in the axial direction comprising a continuous inner wall 22 and a continuous outer wall 24. The inner wall 22 is co-axial with the outer wall 24 of the second conduit 20. The second conduit 20 defines an inner volume 26 between the inner wall 22 of the second conduit 20. The inner volume 26 extends along the length of the second conduit 20.

The inner wall 22 does not directly contact the outer wall 24 of the second conduit 20. A first interspace 28 is provided between the outer wall 24 and the inner wall 22 of the second conduit 20. The first interspace 28 also defines a volume that extends along the length of the second conduit 20.

The outer wall 24 and the inner wall 22 of the second conduit may be reinforced. The outer wall 24 and the inner wall 22 may be reinforced by any suitable means. For example, the outer wall 24 and the inner wall 22 may be thicker than the outer wall 14 of the first conduit 20. The outer wall 24 and the inner wall 22 are reinforced to withstand any external forces applied to the outer wall 24 of the second conduit 20. This may be from routine maintenance tasks, such as welding, loading or other contact forces. In the example where the first interspace 28 contains a fluid or a vacuum (described in more detail below), the outer wall 24 and the inner wall 22 may be reinforced to withstand the loads of the fluid or vacuum. The inner wall 22 and the outer wall 24 may be welded to a joint piece (not shown), such as a flanged coupling or polar mount. The flanged coupling or polar mount may extend between the outer wall 24 and the inner wall 22 of the second conduit 20 to provide a seal between the inner wall 22 and the outer wall 24 (not shown). The flanged coupling or polar mount arrangement act as endplates that complete the first interspace 28 boundary.

The first conduit 10 is housed inside the inner volume 26 of the second conduit 20. As shown in Figure 1, the inner wall 22 of the second conduit 20 is proximal to the outer wall 14 of the first conduit 10. The outer wall 14 of the first conduit 10 is co-axial with the inner wall 22 of the second conduit 20 so the first conduit 10 does not directly contact the second conduit 20. The absence of direct contact between the first conduit 10 and the second conduit 20 also avoids significant conductive heat transfer between the first and second conduits 10, 20. The inner volume 26 of the second conduit 20 may include any number of additional structures, such as electrical routines, pipes or other structures that have been omitted from Figure 1 for clarity.

A second interspace 18 is provided between the first conduit 10 and the second conduit 20. The second interspace 18 is provided in the space in the inner volume 20 of the second conduit 20 minus the first conduit 10. The second interspace 18 may be used to contain any fluid that has leaked from the fluid flow path F. In the instance where the fluid is a cryogenic fluid, such as hydrogen, the first interspace 28 may be evacuated so that it contains a vacuum. Such a vacuum provides thermal insulation of the first conduit 10. The second interspace 18 may be evacuated from either side of the fluid assembly 1.

In other examples, the second interspace 18 may be configured to carry a fluid along a fluid path in the second interspace 18 in the axial direction. The fluid carried by the second interspace 18 is preferably different to the fluid carried by the first conduit 10. The fluid carried by the second interspace 18 may be a liquid or a gas, such as helium, gaseous hydrogen or liquid hydrogen, or a combination of liquid and gaseous components.

In one example, the fluid carried by the second interspace 18 is pressurised. Preferably, the fluid in the second interspace 18 is at a higher pressure than the fluid in the first conduit 10. This causes the fluid carried in the second interspace 18 to exit the second interspace if the inner wall 22 of the second conduit 10 or the outer wall 14 of the first conduit 10 fails. The pressurised fluid may be an inert gas, such as Helium, that can be easily detected if the inner wall 22 of the second conduit 10 fails.

The second interspace 18 may include at least one sensor 38. The sensor 38 is arranged to monitor the second interspace 18 and emit an alarm if the first conduit 10 or the inner wall 22 of the second conduit 20 fail. It will be understood that the sensor(s) 38 may be any suitable sensor that is able to record and/or monitor the second interspace 18 and communicate to an external system by any suitable means. The data collected by the sensors 38 may be used to monitor whether the first conduit 10 and the second conduit 20 have failed.

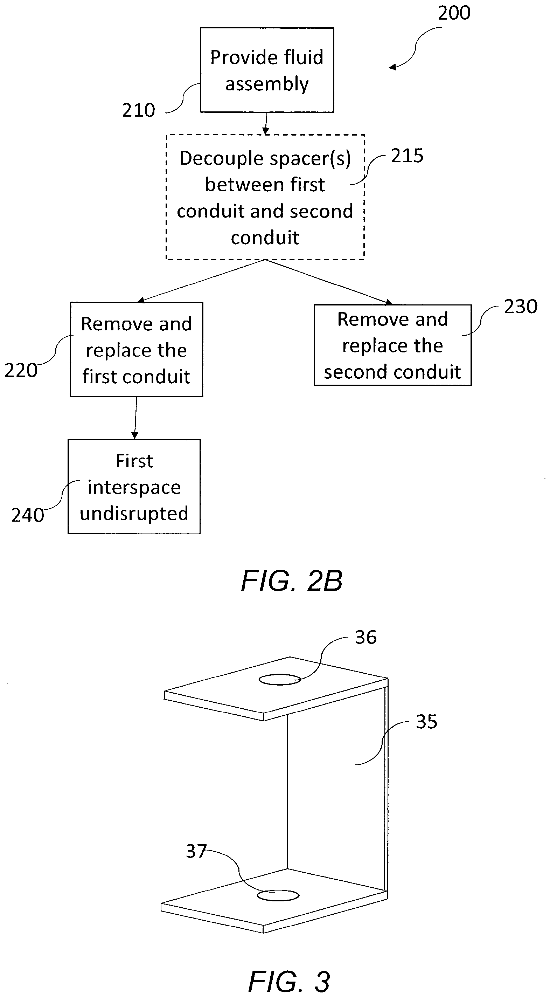

The type of sensor 38 in the second interspace 18 may be chosen dependent on the contents of the second interspace 18. In the example shown in Figure 2, the second interspace 18 includes three exemplary sensors, 38a, 38b, 38c. In this example, the second interspace 18 includes a pressure sensor 38a, a temperature sensor 38b and a gas sensor 38c. The second interspace 18 may include only one sensor 38 or may include any number and/or arrangement of sensors 38 along the length of the second conduit 20.

In the example where the second interspace 18 contains a pressurised fluid, the pressure sensor 38a may be used to monitor the pressure in the second interspace 18. The pressure sensor 38a may be arranged to emit an alarm if the pressure changes in the second interspace 18 changes. For example, the pressure in the second interspace 18 may decrease if there is a failure in the inner wall 22 of the second conduit or in the outer wall 14 of the first conduit 10.

If the fluid carried by the first conduit 10 is a cryogenic fluid, the temperature sensor 38b may be arranged to emit an alarm if the temperature in the second interspace 18 changes. In the example where the first conduit 10 carries a gas, the gas sensor 38c may emit an alarm if the gas carried by the first conduit 10 is detected in the second interspace 18.

The double-outer wall arrangement of the second conduit 20 provides an improved container for the fluid in the first conduit 10. In the event of a failure of the first conduit 10, the second interspace 18 may act as a secondary containment for the fluid. Furthermore, if the first conduit 10 and the inner wall 22 of the second conduit 20 both fail, the fluid may be retained in the first interspace 28. This arrangement therefore provides multiple arrangements to prevent the fluid in the first conduit 10 from escaping the fluid assembly 1. This provides a reliable and robust system for transporting fluid in the fluid assembly 1 that can withstand multiple failure modes without the fluid in the first conduit 10 escaping the second conduit 20.

This arrangement allows the first conduit 10 to be accessed independently from the second conduit 20. The second conduit 20 to be removed, repaired and replaced independently from the first conduit 10. The second conduit 20 may be replaced without interfering with the fluid flow in the first conduit 10. Similarly, the first conduit 10 may be removed, repaired or replaced independently from the second conduit 20. The modular arrangement of the fluid assembly 1 that facilitates the maintenance of the first and second conduits 10, 20 without affecting the surrounding structure and/or the fluid flow in the first conduit 10.

The fluid assembly 1 may also include a plurality of spacers 30, as shown in Figure 2A. The spacers 30 may provide a co-axial arrangement between the first conduit 10 and the second conduit 20. As shown, the spacers are installed in the second interspace 18 to not fully obstruct the second interspace 18. In this example, each spacer 30 is substantially cylindrical and are arranged to contact the outer wall 14 of the first conduit at one end and arranged to contact the inner wall 22 of the second conduit at an opposite end. The spacers 30 may be evenly spaced and arranged equidistantly on opposite sides of the circumference of the first conduit 10, as shown in Figure 2A. In other examples, the spacers 30 may be arranged offset from each other around the circumference of the first conduit 10.

In other examples, the spacers 30 may be provided as rings or collars that are arranged to be wrapped around the circumference of the first conduit 10. In this example, the spacers 30 extend through the entire height of the second interspace 18 and contact the second conduit 20 at one end and contact the first conduit 10 at the opposite end. In this example, the spacers 30 include a plurality of openings through the spacer 30 so the spacer 30 does not interrupt the continuity of the second interspace 18. The spacer 30 therefore does ot obstruct the second interspace 18.

The fluid assembly 1 may include any number of spacers 30. The spacers 30 may be provided on either side of the first conduit 10. The spacers 30 may be spaced along the length of the first and second conduits 10, 20. The spacers 30 may be made of any suitable material, such as metal, composite such as carbon-carbon composite, or polymer such as polytetrafluoroethylene, or polyethylene. Where the fluid carried by the first conduit 10 is cryogenic, it is preferable that the spacers 30 comprise nonconductive material to minimise the conductive thermal connection between the first conduit 10 and the second conduit 20.

The ends of the spacer 30 may be fixed to the first conduit 10 or the second conduit 20, or each end of the spacer 30 may have a sliding connection to the first conduit 10 or the second conduit 20. The spacers 30 may be positioned between the first conduit 10 and the second conduit 20 through any suitable means, such as an interference fit or a tight fit that enables relative movement between the conduits 10, 20.

The first conduit 10 of the fluid assembly 1 may be replaced without disrupting the operation of the second conduit 20. Similarly, the second conduit 20 may be removed and replaced without disrupting the operation of the first conduit 10. An exemplary method 200 of replacing a part in a fluid assembly 1 is shown in Figure 2B. A fluid assembly is provided at step 210. At step 220, the first conduit 10 is removed from the second conduit 20. This may be done without removing the second conduit 20. If the first interspace 28 contains a fluid, such as a pressurised gas, or a vacuum, the first conduit 10 may be removed without disrupting the first interspace 28 at step 240. The parts in the fluid assembly 1 are therefore easier and quicker to remove and replace as the contents of the first interspace 28 do not need to be removed to replace the first conduit 10. The first interspace 28 can therefore maintain the pressurised fluid or may maintain the vacuum throughout the removal and replacement process.

Alternatively, at step 230, the second conduit 20 may be removed and replaced without disrupting the first conduit 10. The first conduit 10 may therefore continue to carry fluid. Similarly, the parts in the fluid assembly 1 are therefore easier and quicker to remove and replace as the contents of the first conduit 10 does not need to be interrupted to replace the second conduit 20.

If the fluid assembly 1 contains spacers 30, then removing and replacing the first conduit 10 or removing and replacing the second conduit 20 may include decoupling the at least one spacer 30 between the first conduit 10 and the second conduit 20. Removing the spacers 30 allows the first conduit 10 to be removed independently from the second conduit 20 and vice versa.

As described above, if only the first conduit 10 needs to be replaced, this may be done without removing the second conduit 20. If the second conduit 20 is replaced, then this can be done without disrupting the flow of fluid in the first conduit 10.

The fluid assembly 1 further comprises at least one bracket 35 to maintain the co-axial arrangement between the outer wall 24 and the inner wall 22 of the second conduit 20, as shown in Figure 2A. The fluid assembly 1 may include a plurality of brackets 35. Each bracket 35 is arranged in the first interspace 28 so as to not interrupt the continuity of the first interspace 28. Each bracket 35 does not fully obstruct the first interspace 28.

An exemplary bracket 35 is shown in more detail in Figure 3. The bracket 35 is configured to be installed in the second interspace 28. The bracket 35 may be any suitable shape, such as the exemplary U-shaped bracket 35 in Figure 3. Each bracket 35 is arranged to contact the inner wall 22 of the second conduit 20 at one end of the bracket 35 and contact the outer wall 24 of the second conduit 20 at the opposite end of the bracket 35. The brackets 35 may be evenly spaced and arranged equidistantly on opposite sides of the circumference of the second conduit 20, as shown in Figure 2A. In other examples, the brackets 35 may be arranged offset from each other around the circumference of the second conduit 20.

The bracket 35 may be positioned with an interference fit between the bracket 35 and the inner and outer walls 22, 24. The brackets 35 may be made of any suitable material, such as metal, composite such as carbon-carbon composite, or polymer such as polytetrafluoroethylene, or polyethylene. Preferably, the brackets 35 is made from metal so that the bracket 35 may be rigid to withstand the loading forces.

In other examples, the bracket 35 may be permanently or removably coupled to the outer and inner walls 22, 24. For example, one end of the bracket 35 may be fixed to the inner wall 22 with an inner fixture 36 (shown schematically in Figure 3). The bracket 35 may be fixed to the outer wall 24 with an outer fixture 37 (shown schematically in Figure 3). The inner and/or the outer fixture 36, 37 may be removably attached to the inner wall 22 or outer wall 24 of the second conduit 20. The inner and outer fixture 36, 37 may be any suitable form of mechanical fixture as the inner wall 22 and the outer wall 24 experience different temperatures. The brackets 35 may be positioned between the inner wall 22 and the outer wall 24 through any suitable means, such as an interference fit or a tight fit that allows movement of the second conduit 20. Preferably the bracket 35 is short to minimise the likelihood of the bracket 35 buckling under the force of the outer wall 24.

In another example. the inner wall 22 and the outer wall 24 of the second conduit 20 may be removably coupled together with the brackets 35. The brackets 35 may therefore be removable so as to detach the outer wall 24 from the inner wall 22. This arrangement allows the outer wall 24 to be replaced without disrupting the second interspace 18 between the inner wall 22 and the first conduit 10. This may be desirable, for example, where the outer wall 24 has been damaged or showing corrosion and needs to be replaced. The outer wall 24 can also be easily replaced in the event of a failure without disrupting the second interspace 18. Similarly, the inner wall 22 may be removable from the outer wall 24 by using removable brackets 35. The inner wall 22 may therefore also be replaced in the event of a failure without removing the outer wall 24.

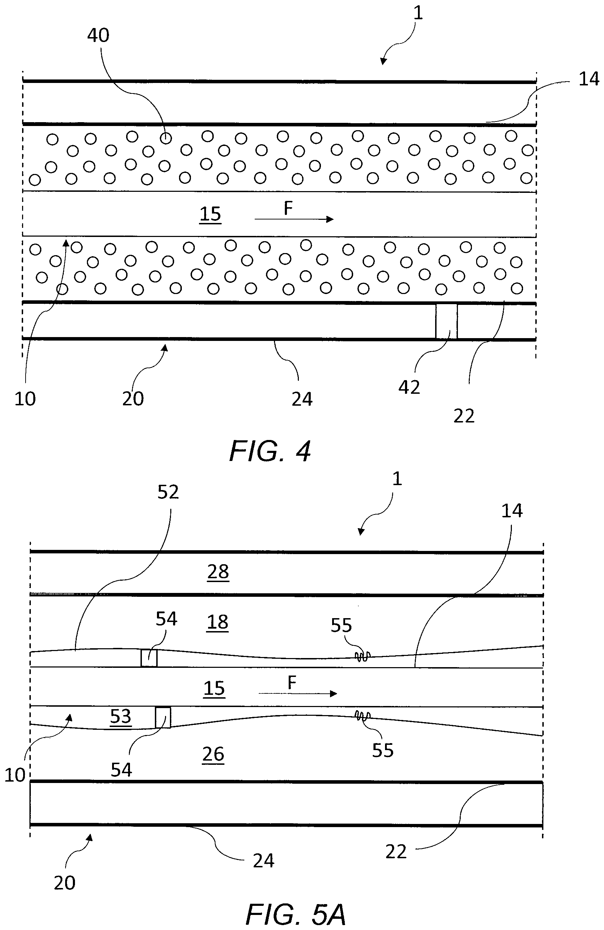

In other examples, the second interspace 18 may include glass microbubbles 40, as shown in Figure 4. The glass bubbles may be introduced by adding a mesh (not shown) over one end of the second conduit 20 and blowing the bubbles 40 into the internal volume 26. The glass microbubbles 40 may be removed in a similar manner, by blowing, or vacuuming, them from the internal volume 26. The glass microbubbles 40 surround the first conduit 10 and are arranged to provide additional thermal and radiative insulation. The glass microbubbles 40 provide relatively low conductive transmission of heat.

The fluid assembly 1 may further comprise a charge valve 42, shown schematically in Figure 4. The charge valve 42 is in fluid communication with the inner volume 26 of the second conduit 20 and outside the outer wall 24 of the second conduit 20. The fluid in the first conduit 10 will flow into the second interspace 18 if the outer wall 14 of the first conduit 10 fails. The escaped fluid may be retrieved by operating the charge valve 42, which allows the fluid in the second interspace 18 (which includes the fluid from the first conduit 10) to flow through the charge valve 42 and be collected outside of the second conduit 20. If any fluid is used in the second interspace 18, the fluid from the first conduit 10 can then be separated from the fluid in the second interspace 18 in a subsequent separation process. The charge valve 42 is therefore operable to harvest any escaped fluid from the first conduit 10. This may be desirable if the fluid in the first conduit 10 is difficult to source and it is desirable to re-use the fluid within the second interspace, such as a noble gas. This may be especially desirable when the fluid in the first conduit 10 includes a cryogenic fluid, such as liquid hydrogen. Similarly, the charge valve 42 is operable to introduce a fluid into the second interspace 18. The charge valve 42 may be operable to introduce a pressurised gas into the second interspace 18.

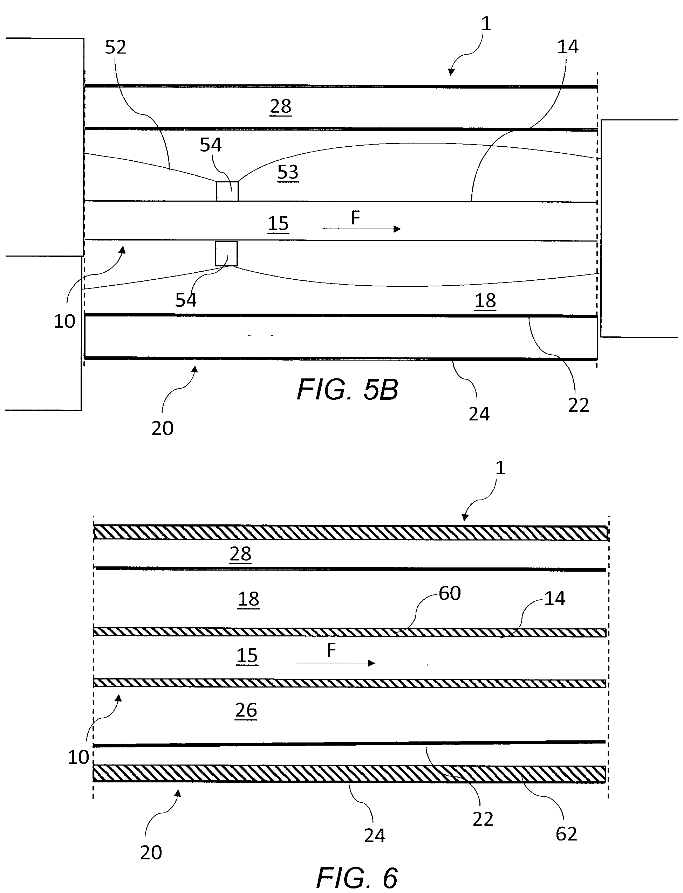

The fluid assembly 1 may further comprise an inflatable structure 52. Figure 5A shows the inflatable structure 52 in a deflated state, while Figure 5B shows the inflatable structure in a partially inflated state. The inflatable structure 52 surrounds the first conduit 10 and is positioned in the second interspace 18. The inflatable structure 52 includes an inner volume 53. As shown, the inflatable structure 52 may be at anchored to the first conduit 10 at multiple connection points 54 along the length of the first conduit 10. In other examples, the inflatable structure 52 may only be connected at either end of the first conduit 10. The inflatable structure 52 may include expanding radial bellows 55 (indicated schematically in Figure 5A). The radial bellows 55 are collapsed in a deflated state but allow the inflatable structure 52 to expand if required.

If the outer wall 14 of the first conduit 10 has not failed or leaked, the inflatable structure 52 remains in a deflated state, as shown in Figure 5A. If the outer wall 14 of the first conduit 10 has failed, the fluid in the first conduit 10 will flow into the inner volume 53 of the inflatable structure 52. The inflatable structure 52 then inflates and contains the escaped fluid from the first conduit 10, as shown in Figure 5B. The inflatable structure 52 does not obstruct the second interspace 18 when fully inflated. This prevents the fluid from the first conduit 10 from mixing with the second interspace 18, which may contain a fluid. This may be desirable if the second interspace 18 contains a fluid. The escaped fluid from the first conduit 10 can also therefore be easily retrieved from the inflatable structure 52.

The fluid assembly 1 may further comprise insulation 60 in the second interspace 18. In the example shown in Figure 6, the insulation 60 extends around the first conduit 10. The insulation 60 may extend along the entire length of the first conduit 10 or may extend in sections around the conduit 10. The insulation 60 may be wrapped around the conduit 10 or may be partially secured to the first conduit 10 through any suitable means. In this arrangement, the insulation 60 is configured to thermally insulate the fluid in the first conduit 10 and also acts as a barrier if the outer wall 14 of the first conduit 10 fails. In other examples, the insulation 60 may be positioned against the inner wall 22 of the second conduit 20.

The fluid assembly 1 may further comprise insulation 62 in the first interspace 28. In the example shown in Figure 6, the insulation extends around the outer wall 24 of the second conduit 20. The insulation 62 may extend along the entire length of the second conduit 10 or may extend in sections around the conduit 20. The insulation 62 may be wrapped around the conduit 20 or may be partially secured to the second conduit 10 through any suitable means. In this arrangement, the insulation 62 is configured to provide additional thermal insulation of the fluid in the second conduit 20, and the fluid contained within the first conduit 10. The insulation 62 also acts as a barrier if the inner wall 22 of the second conduit 20 fails. In other examples, the insulation 62 may be positioned against the inner wall 22 of the second conduit 20 or may include insulation on both the inner wall 22 and the outer wall 24. In other examples, the insulation 62 may alternate between extending along the inner wall 22 and the outer wall 24 of the second conduit. The insulation 60, 62, prevents temperature heat effects between the first conduit 10 and the second conduit 20. The insulation 60, 62 may be Multi-Layer Insulation (MLI) to reduce radiated heat transfer.

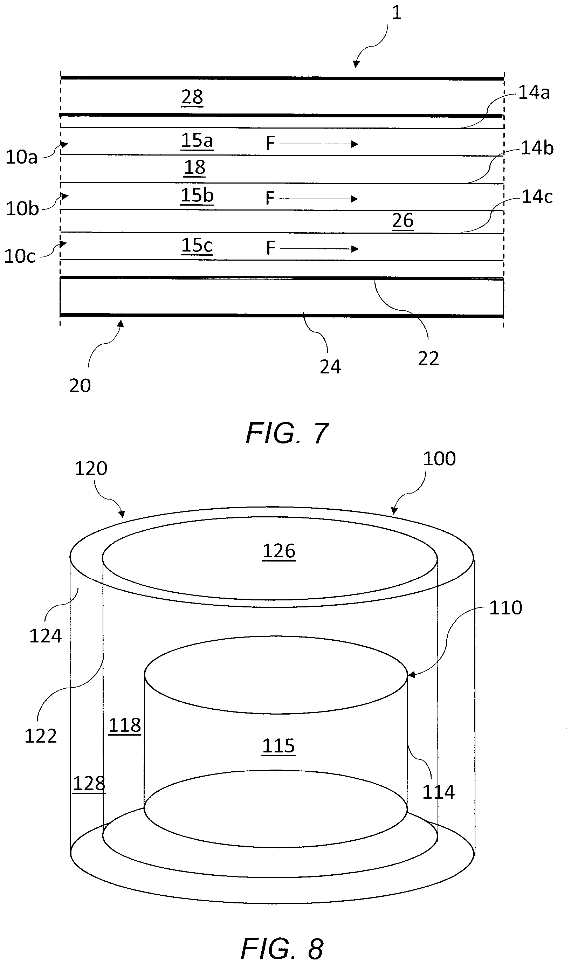

In the example shown in Figures 1-6, the fluid assembly 1 includes one fluid conduit 10 housed inside one second conduit 20. In other examples, as shown in Figure 7, the fluid assembly 1 may include several first conduits 10 housed inside the second conduit 20. In the example shown in Figure 7, each first conduit 10a, 10b, 10c is arranged in parallel. The features of each first conduit 10 is denoted with suffix 'a, b, c' respectively. Each first conduit 10a, 10b, 10c is configured to carry a fluid as described above. In the example shown in Figure 7, each first conduit 10a, 10b, 10c is arranged in parallel, However, in other arrangements, each first conduit 10a, 10b, 10c may be arranged inside the second conduit 20 in any suitable arrangement that allows adequate spacing between each first conduit 10. Preferably, each first conduit 10a, 10b, 10c is arranged within the second conduit 20 to have an equidistant gap between each first conduit 10a, 10b, 10c and the inner wall of the second conduit 20.

The fluid assembly 1 may be assembled in parts. For example, the second conduit 20 may be provided and installed first. The outer wall 24 may be pre-assembled with the inner wall 22 before installation of the second conduit 20. Alternatively, the outer wall may be attached to the inner wall 22 after the second conduit 20 is installed into position. This provides access to the inner wall 22 and the first interspace 28 before the outer wall 24 is secured into position. This may be used to install the insulation 62 or to check the inner wall 22. Once the second conduit 20 has been installed in position, the first conduit 10 is inserted into the inner volume 26 of the second conduit 20 so that the first conduit 10 is housed in the second conduit 20. In other examples, the first conduit 10 may be installed first and the second conduit 20 may be installed over the first conduit 10.

In the examples described in Figures 1-7, the fluid assembly 1 included a first conduit 10 carrying a fluid and housed in a second conduit 20. Another exemplary fluid assembly 100 is shown in Figure 8. Identical features of the fluid assembly 100 to the fluid assembly 1 have the same reference numeral and increased by 100. It will be understood that features of the fluid assembly 1 are applicable to the fluid assembly 100 and detailed description of the identical features will not be repeated again.

As shown, the fluid assembly 100 includes a first storage tank 110 that is configured to hold a fluid in an internal volume 115. The first storage tank 110 is provided as a cylindrical tank and has a continuous outer wall 114. Similarly to the fluid assembly 1, the fluid may be a liquid (such as kerosene or liquid hydrogen) or a gas. Preferably, the inner fluid flow path may contain a liquid at a temperature below - 150°C. The inner fluid flow path may contain a liquid hydrogen at a temperature below -250°C.

A second tank 120 is also provided. The second tank 120 is a double walled outer second tank 120. In this example, the second tank 120 substantially cylindrical and has a double outer wall arrangement comprising a continuous inner wall 122 and a continuous outer wall 124. The inner wall 122 is co-axial with the outer wall 124 of the second tank 120. The second tank 120 therefore has a largely equidistant gap between the inner wall 122 and the outer wall 124. The second tank 120 defines an inner volume 126 between the inner wall 22 of the second tank 120. The inner volume 126 extends along the length of the second tank 120. The second tank has a first interspace 128 between the inner wall 122 and the outer wall 124. In other examples, the first storage tank 110 and the second storage tank 120 may be any suitable cylindrical shape, such as being partially conical at either end or truncated.

The first storage tank 110 is housed inside the inner volume 126 of the second tank 120. A second interspace 118 is provided between the first storage tank 110 and the second tank 120. The second interspace 118 may be used to contain any fluid that has leaked from the storage tank 110. In other examples, the second interspace 118 may also hold a fluid. In this example, the storage tank 110 has a smaller height than the second tank 120. However, the storage tank 110 may have any height in the second tank 120.

Similarly to the fluid assembly 1, the double-outer wall arrangement of the second tank 120 of the fluid assembly 100 provides an improved container for the fluid in the first storage tank 110. The fluid assembly 100 helps prevent the fluid in the first conduit 110 from escaping the fluid assembly 100. This provides a reliable and robust system for storing fluid in the fluid assembly 100 that can withstand multiple failure modes without the fluid in the first storage tank 110 escaping the second tank 120. This is because in the event of a failure of the first storage tank 110, the second interspace 118 may act as a secondary containment for the fluid. Furthermore, if the first storage tank 110 and the inner wall 122 of the second tank 120 both fail, the fluid may be retained in the first interspace 128.

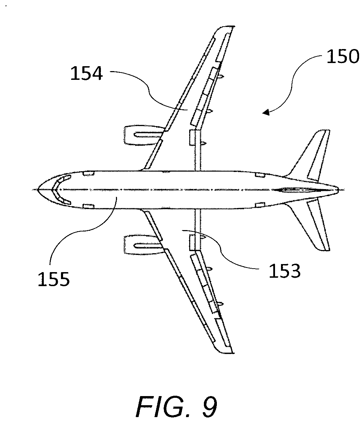

The fluid assemblies 1, 100 may be used in a number of different applications. For example, the fluid assemblies 1, 100 may be part of any suitable arrangement where fluid needs to be contained and the leakage of said fluid needs to be prevented and easily detectable. This is especially important where the fluid is a cryogenic fluid. This may be used in transport, such as automotive applications, or in stationary applications, such as laboratory equipment. The fluid assemblies 1, 100 may also be used in an aircraft 150 shown in Figure 9, which comprises a fuselage 155 and a pair of wings 153, 154. The fluid assemblies 1, 100 may be part of the fuel system of the aircraft 150, which may be located in the wings 153, 154 and/or in the fuselage 155 of the aircraft. For example, the outer wall 24 of the second conduit 20 may form part of the skin of the wings 153, 154 or the fuselage 155. For example, the fluid assemblies 1, 100 may convey liquid hydrogen fuel from a hydrogen tank to a fuel cell which drives a propulsion engine on one of the wings 153, 154. Alternatively, the fluid assemblies 1, 100 may convey liquid kerosene fuel from a fuel tank to an auxiliary power unit (APU) in the fuselage 155.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A fluid assembly comprising:
a first conduit extending in an axial direction and configured to carry a fluid;
a double walled outer second conduit extending in the axial direction; the second conduit having an inner wall and outer wall and a first interspace between the inner and outer walls;
wherein the first conduit is housed inside the second conduit to form a second interspace between the first conduit and the inner wall of the second conduit.

2. A fluid assembly comprising:
a first storage tank configured to hold a fluid;
a double walled outer second tank; the second tank having an inner wall and outer wall and a first interspace between the inner and outer walls;
wherein the first tank is housed inside the second tank to form a second interspace between the first storage tank and the inner wall of the second tank.

3. A fluid assembly according to any preceding claim, wherein the first interspace contains a vacuum.

4. A fluid assembly according to any preceding claim, wherein the assembly further comprises at least one bracket between the outer wall and the inner wall of the second conduit or the second storage tank, wherein the bracket is configured to maintain co-axial relationship between the outer wall and the inner wall of the second conduit or the second tank.

5. A fluid assembly according to claim 4, wherein the at least one bracket is removably coupled to the inner wall of the second conduit or the inner wall of the second tank.

6. A fluid assembly according to any preceding claim, wherein the second interspace contains insulation wrapped around the first conduit or the first storage tank.

7. A fluid assembly according to any preceding claim, wherein the first interspace contains insulation wrapped around the inner wall or the outer wall of the second conduit or around the inner wall or the outer wall of the second tank.

8. A fluid assembly according to claim 6 or 7, wherein insulation comprises multi-layered insulation.

9. A fluid assembly according to any preceding claim, wherein the second interspace contains a vacuum.

10. A fluid assembly according to claim 9, wherein the second interspace contains a pressurised fluid.

11. A fluid assembly according to claim 10, wherein the pressurised fluid is an inert gas, preferably Helium.

12. A fluid assembly according to claim 10 or 11, wherein the pressurised fluid in the second interspace is at a higher pressure than a pressure of the fluid in the first conduit or the pressure of the fluid in the first storage tank.

13. A fluid assembly according to any one of claims 1-8, wherein the second interspace contains a plurality of glass microbubbles.

14. A fluid assembly according to any preceding claim, wherein the fluid carried by the first conduit or held by the first storage tank is a cryogenic fluid, preferably at a temperature below -150°C.

15. A fluid assembly according to claim 14, wherein the fluid is liquid hydrogen.

16. A fluid assembly according to any preceding claim, wherein the second interspace contains at least one sensor.

17. A fluid assembly according to claim 16, wherein the at least one sensor is a pressure sensor or a temperature sensor or a gas sensor.

18. A fluid assembly according to any preceding claim, wherein the second interspace further comprises an inflatable flexible structure anchored to the first conduit or first storage tank so as to surround the first conduit or the first storage tank.

19. A fluid assembly according to any preceding claim, wherein the assembly further comprises at least one spacer between the second conduit and the first conduit or between the second tank and the first storage tank.

20. A fluid assembly according to any preceding claim, wherein the assembly further comprises charge valves coupled to the second conduit or to the second storage tank.

21. A fluid assembly according to any preceding claim, further comprising a plurality of first conduits housed inside the second conduit, wherein each first conduit is arranged in parallel with the first conduit and each first conduit is configured to carry a fluid, or a plurality of first storage tanks housed inside the second tank, wherein each first storage tank is arranged in parallel with the first storage tank and each first storage tank is configured to hold a fluid.

22. An aircraft comprising the fluid assembly according to any preceding claim.

23. A method of replacing a part in a fluid assembly according to any one of claims 1 to 21, the method comprising:
removing and replacing the first conduit or first storage tank without disrupting the second conduit or second storage tank; or
removing and replacing the second conduit or second storage tank without disrupting the first conduit or first storage tank.

24. A method according to claim 23, wherein removing and replacing the first conduit or first storage tank or the second conduit or second storage tank further comprises decoupling at least one spacer positioned between the first conduit or first storage tank and the second conduit or second storage tank before removing and replacing the first conduit or first storage tank or the second conduit or second storage tank.

25. A method according to claim 23 or 24, wherein when the first interspace contains a fluid or a vacuum, removing and replacing the first conduit or first storage tank does not disrupt the fluid or vacuum in the first interspace.
